# EUROPEAN PATENT APPLICATION

(11) **EP 3 933 664 A1**
(43) Date of publication of application: **05.01.2022**
(21) Application number: 19939634.2
(22) Date of filing: 31.07.2019
(51) Int. Cl.: G06K 9/00

(54) **INTEGRATED CHIP AND SENSOR DATA PROCESSING METHOD**

(71) Applicant: Huawei Technologies Co., Ltd., Longgang Shenzhen, Guangdong 518129 (CN)
(72) Inventor: ZHU, Zhengchao, Shenzhen, Guangdong 518129 (CN); LIU, Yu, Shenzhen, Guangdong 518129 (CN); ZHANG, Qi, Shenzhen, Guangdong 518129 (CN)
(74) Representative: Thun, Clemens
(86) International application number: PCT/CN2019/098653
(87) International publication number: WO 2021/016931

(57) **Abstract**

This application discloses an integrated chip in the artificial intelligence field. This application provides an integrated chip. The integrated chip includes a first processor, configured to obtain first sensor data from a first external sensor, and extract first target data from the first sensor data, where the first processor is a real-time response processor; and an accelerator, configured to identify the first target data based on a first neural network model to obtain a first identification result, where the first identification result is used to determine a target operation corresponding to the first identification result. This application provides an integrated chip and a sensor data processing method, to enable a real-time response processor to identify a complex scenario and process a complex task when responding to an external sensor in real time.

## Description

### TECHNICAL FIELD

This application relates to the data processing field in the artificial intelligence field, and more specifically, to an integrated chip and a sensor data processing method.

### BACKGROUND

An electronic device generally includes a real-time response processor with low energy consumption. The real-time response processor may periodically drive a sensor on the electronic device to sense external information, and may respond in real time to the external information obtained by the sensor. For example, a microphone configured to obtain external sound is disposed on the electronic device. The real-time response processor may periodically drive the microphone, extract target data from obtained audio information, and determine whether there is a wake-up word. After capturing the wake-up word, the real-time response processor may wake up a module in a sleep state. In a possible case, after capturing a specific wake-up word, the real-time response processor may wake up a voice instruction module in the electronic device, so that the electronic device may respond to a voice instruction of a user and perform a corresponding operation. In another possible case, after capturing a specific wake-up word, the real-time response processor may wake up an image display module in the electronic device and turn on a screen.

Because the real-time response processor is permanently online, to avoid excessive energy consumption, a task that can be responded to by the real-time response processor is usually relatively simple. The real-time response processor cannot process a complex task, and therefore cannot meet a requirement of the user.

### SUMMARY

This application provides an integrated chip and a sensor data processing method, to enable a real-time response processor to identify a complex scenario and process a complex task when responding to an external sensor in real time.

According to a first aspect, an integrated chip is provided. The integrated chip includes a first processor, configured to obtain first sensor data from a first external sensor, and extract first target data from the first sensor data, where the first processor is a real-time response processor; and an accelerator, configured to identify the first target data based on a first neural network model to obtain a first identification result, where the first identification result is used to determine a target operation corresponding to the first identification result.

The integrated chip may also be referred to as a system on a chip (system on a chip, SOC), or a part of a system on a chip.

"Target data extraction" in this application may be interpreted as extracting a part of information obtained by an external sensor. The extracted information may be equivalent to "features". The extracted information may be used for further processing. In other words, some data may be removed from the information obtained by the external sensor, and remaining data may be further identified. In one manner, the target data extraction is performed according to a preset rule, and data that meets the preset rule is extracted. When no preset rule exists, all data obtained by the external sensor may be sent to the accelerator.

A neural network model is a mathematical model that includes a neural network. The neural network model may be stored in a storage medium in a form of an algorithm, code, or the like. In this application, a neural network model executed by the accelerator may be simplified. The neural network model is simplified. For example, some layers such as a convolutional layer, a pooling layer, and a neural network layer may be removed from a trained neural network model. For another example, a quantity of neurons in each layer of the neural network model may be reduced. A simplified neural network model needs to be retrained.

In one case, the target operation may be maintaining a current status of an electronic device. In another case, the target operation may be waking up another processor in the electronic device, so that the another processor switches from a sleep state to a working state. In addition, information such as the first target data, the first identification result, and instructions is sent to the another processor.

In this embodiment of this application, the real-time response processor can respond in real time to data of the external sensor; and the neural network model can respond to data sent by the real-time response processor at a high frequency or even in real time. In this way, a complex scenario can be identified and a complex task can be processed at a high frequency without significantly increasing power consumption.

With reference to the first aspect, in some implementations of the first aspect, the first processor is further configured to determine the target operation based on the first identification result.

In this embodiment of this application, a first sensor that can respond to the external sensor in real time is configured to respond to the accelerator, thereby avoiding using an excessive quantity of processors, and simplifying a chip hardware structure.

With reference to the first aspect, in some implementations of the first aspect, the integrated chip further includes: a second processor, configured to determine the target operation based on the first identification result.

In this embodiment of this application, the second processor is configured to process a calculation result output by the accelerator, so that a specific function is more easily assigned to a hardware architecture, and complexity of data flow directions between the processors and between the accelerator and the processors is reduced.

With reference to the first aspect, in some implementations of the first aspect, the first processor is further configured to: after extracting the first feature data, indicate the second processor to switch from a sleep state to a working state. The second processor is specifically configured to: when being in the working state, determine the target operation based on the first identification result.

In other words, the second processor may not be a real-time response processor.

In this embodiment of this application, because the accelerator has a relatively strong computing capability and a relatively fast computing speed, after the first processor extracts the feature data, the first processor may wake up the second processor, so that the second processor is in the working state and responds to the identification result sent by the accelerator. Because the second processor may not need to be in a real-time online state, energy consumption is reduced.

With reference to the first aspect, in some implementations of the first aspect, the first processor is further configured to determine a third identification result based on the first sensor data, where the first identification result and the third identification result are used to determine the target operation together.

In this embodiment of this application, a simple task may be handed over to the first processor for processing, and a complex task may be handed over to the accelerator for processing. Because a calculation amount of the simple task is small, a calculation resource of the accelerator does not need to be occupied. This helps improve usage efficiency of the accelerator. In addition, a task originally processed by the first processor is still handed over to the first processor for processing instead of being handed over to the another processor or the accelerator for processing. This facilitates compatibility of the method provided in this embodiment with a conventional real-time response processor.

With reference to the first aspect, in some implementations of the first aspect, the first processor is further configured to determine the third identification result based on the first sensor data. The second processor is specifically configured to determine the target operation based on the first identification result and the third identification result.

In this embodiment of this application, the second processor is configured to process a calculation result output by the first processor and the calculation result output by the accelerator, so that data reflow is avoided, the specific function is more easily assigned to the hardware architecture, and the complexity of the data flow directions between the processors and between the accelerator and the processors is reduced.

With reference to the first aspect, in some implementations of the first aspect, the first processor is further configured to: obtain second sensor data from a second external sensor, and extract second target data from the second sensor data. The accelerator is further configured to identify the second target data based on a second neural network model to obtain a second identification result, where the second identification result and the first identification result are used to determine the target operation together.

In this embodiment of this application, the accelerator may process the data from the two different external sensors. Therefore, the accelerator may identify various types of perception data. This helps improve a capability of the electronic device in identifying a complex scenario.

With reference to the first aspect, in some implementations of the first aspect, the accelerator is further configured to identify the first target data and the second target data in a time-sharing manner.

In this embodiment of this application, because a time spent by the accelerator in calculating data is very short, it may be preset that the accelerator processes only one task per unit of time. In other words, the identification results corresponding to the different sensor data can be obtained in a timely manner without adding a processing unit or a storage unit in the accelerator.

With reference to the first aspect, in some implementations of the first aspect, the integrated chip further includes: a controller, configured to determine a first priority corresponding to the first target data and a second priority corresponding to the second target data. The accelerator is specifically configured to identify, based on the first priority and the second priority, the first target data and the second target data in a time-sharing manner.

In this embodiment of this application, the integrated chip further includes the controller configured to schedule data flows. The integrated chip may send a processing order of the data flows to the accelerator, and the accelerator may process the data in an order based on a priority determined by the controller. This helps ensure that important data is processed early and avoid situations such as congestion of the data flows.

With reference to the first aspect, in some implementations of the first aspect, the integrated chip further includes: a controller, configured to: determine a first priority corresponding to the first target data and a second priority corresponding to the second target data; and control, based on the first priority and the second priority, the first processor to send the first target data and the second target data to the accelerator in a time-sharing manner, so that the accelerator identifies the first target data and the second target data in a time-sharing manner.

In this embodiment of this application, the integrated chip further includes the controller configured to schedule data flows. After the accelerator completes processing on previous data, the controller may control the first processor to send, to the accelerator, data that currently needs to be processed by the accelerator. The accelerator does not need much memory to store to-be-processed data. In addition, because a data processing capability of the first processor is weaker than a data processing capability of the accelerator, the first processor requires relatively little memory to process data. Therefore, extra memory may be used to store data that is not processed by the accelerator. This helps fully improve utilization of a processing unit and a storage unit.

With reference to the first aspect, in some implementations of the first aspect, the integrated chip further includes: a third processor, configured to switch from a sleep state to a working state in response to the target operation.

In this embodiment of this application, the third processor may not be a real-time response processor, and the third processor may not need to be in a real-time online state. In this way, energy consumption is reduced.

With reference to the first aspect, in some implementations of the first aspect, parameters in the first neural network model are updated by using a network.

In this embodiment of this application, updating the parameters in the first neural network model may be an accelerator upgrade method. This accelerator upgrade method occupies few data resources. Therefore, the accelerator upgrade method is relatively simple, easy to perform, and has relatively high flexibility.

With reference to the first aspect, in some implementations of the first aspect, the first external sensor includes one of a camera, a microphone, a motion sensor, a distance sensor, an ambient optical sensor, a magnetic field sensor, a fingerprint sensor, or a temperature sensor.

In this embodiment of this application, any sensor data may be processed by using the accelerator. This helps identify the complex scenario and process the complex task.

According to a second aspect, an electronic device is provided, including the integrated chip in any one of the first aspect or the possible implementations of the first aspect.

According to a third aspect, a sensor data processing method is provided, including: obtaining first sensor data from a first external sensor in real time, and extracting first target data from the first sensor data; and identifying the first target data based on a first neural network model to obtain a first identification result, where the first identification result is used to determine a target operation corresponding to the first identification result.

With reference to the third aspect, in some implementations of the third aspect, the method further includes: determining the target operation based on the first identification result.

With reference to the third aspect, in some implementations of the third aspect, the method further includes: obtaining second sensor data from a second external sensor in real time, and extracting second target data from the second sensor data; and identifying the second target data based on a second neural network model to obtain a second identification result, where the second identification result and the first identification result are used to determine the target operation together.

With reference to the third aspect, in some implementations of the third aspect, the method further includes: performing the target operation.

With reference to the third aspect, in some implementations of the third aspect, parameters in the first neural network model are updated by using a network.

With reference to the third aspect, in some implementations of the third aspect, the first external sensor includes one of a camera, a microphone, a motion sensor, a distance sensor, an ambient optical sensor, a magnetic field sensor, a fingerprint sensor, or a temperature sensor.

According to a fourth aspect, a sensor data processing apparatus is provided, where the apparatus includes a module configured to perform the method in any one of the third aspect or the possible implementations of the third aspect.

### BRIEF DESCRIPTION OF DRAWINGS

FIG. 1 is a schematic diagram of a hardware structure of an electronic device according to an embodiment of this application;
FIG. 2 is a schematic diagram of interaction between an integrated chip and an external sensor according to an embodiment of this application;
FIG. 3 is a schematic diagram of a hardware structure of an accelerator according to an embodiment of this application;
FIG. 4 is a schematic diagram of interaction between an integrated chip and an external sensor according to an embodiment of this application;
FIG. 5 is a schematic diagram of interaction between an integrated chip and an external sensor according to an embodiment of this application;
FIG. 6 is a schematic diagram of interaction between an integrated chip and an external sensor according to an embodiment of this application;
FIG. 7 is a schematic diagram of interaction between an integrated chip and an external sensor according to an embodiment of this application; and
FIG. 8 is a schematic flowchart of a sensor data processing method according to an embodiment of this application.

### DESCRIPTION OF EMBODIMENTS

The following describes technical solutions of this application with reference to accompanying drawings.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly. It should be further understood that in the following embodiments of this application, "at least one" and "one or more" refer to one, two, or more than two. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment. Instead, the statements mean referring to "one or more but not all of the embodiments", unless otherwise specifically emphasized in other ways. The terms "include", "comprise", "have", and their variants all mean "include but are not limited to", unless otherwise specifically emphasized in other ways.

The following describes an electronic device provided in the embodiments of this application and embodiments for using such an electronic device. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device using iOS^{®}, Android^{®}, Microsoft^{®}, or another operating system. The portable electronic device may alternatively be another portable electronic device, for example, a laptop (Laptop). It should be further understood that, in some other embodiments, the foregoing electronic device may not be a portable electronic device but a desktop computer.

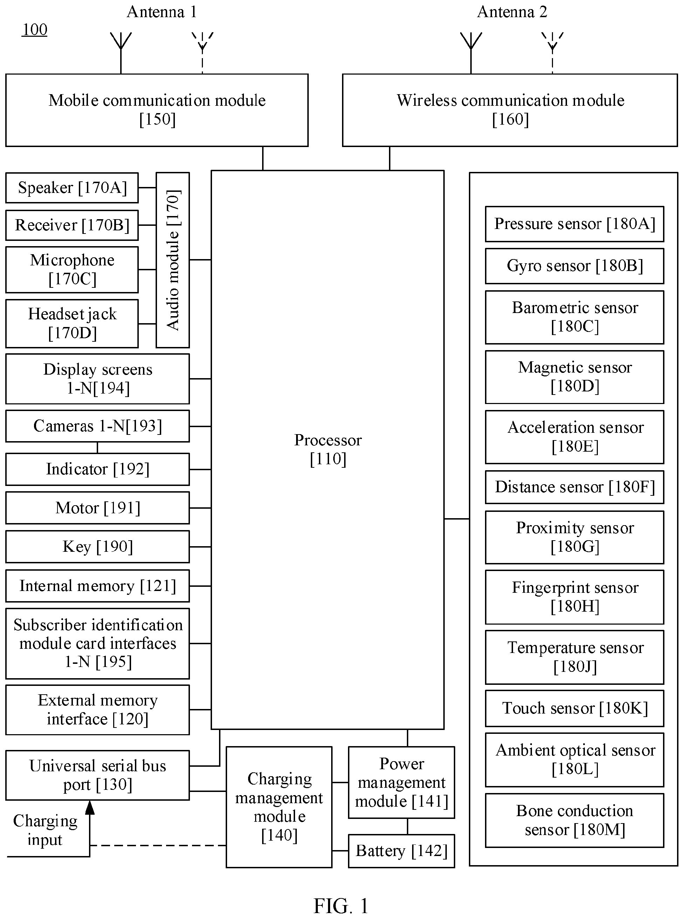

For example, FIG. 1 is a schematic structural diagram of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like.

It may be understood that an example structure in this embodiment of this application does not constitute a specific limitation on the electronic device 100. In some other embodiments of this application, the electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), and a baseband processor. Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may be further disposed in the processor 110, to store instructions and data. For example, the memory in the processor 110 may be a cache memory. The memory may store instructions or data just used or cyclically used by the processor 110. If the processor 110 needs to use the instructions or the data again, the processor 110 may directly invoke the instructions or the data from the memory. In this way, repeated access is avoided, a waiting time of the processor 110 is reduced, and efficiency of processing data or executing instructions by the electronic device 101 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, an SIM interface, a USB interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 101, or may be configured to transmit transmission between the electronic device 101 and a peripheral device. The USB interface 130 may alternatively be configured to connect to a headset, and play audio by using the headset.

It may be understood that an interface connection relationship between modules illustrated in this embodiment of this application is merely an example for description, and does not constitute a limitation on the structure of the electronic device 100. In some other embodiments of this application, the electronic device 100 may alternatively use an interface connection mode different from that in the foregoing embodiment, or use a combination of a plurality of interface connection modes.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and a video are stored in the external memory card.

The internal memory 121 may be configured to store one or more computer programs, where the one or more computer programs include instructions. The processor 110 may run the instructions stored in the internal memory 121, so that the electronic device 101 performs the screen-off display method provided in some embodiments of this application, various applications, data processing, and the like. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a nonvolatile memory, for example, one or more magnetic disk storage devices, flash memory devices, or universal flash storages (universal flash storage, UFS). In some embodiments, the processor 110 may run the instructions stored in the internal memory 121 and/or the instructions stored in the memory that is disposed in the processor 110, to enable the electronic device 101 to perform the screen-off display method provided in the embodiments of this application, other applications, and data processing. The electronic device 100 may implement audio functions, for example, music playback and recording, by using the audio module 170, the speaker 170A, the receiver 170B, the microphone 170C, the headset jack 170D, the application processor, and the like.

The charging management module 140 is configured to receive charging input from the charger. The charger may be a wireless charger or a wired charger. In some embodiments of wired charging, the charging management module 140 may receive charging input from a wired charger through the USB interface 130. In some embodiments of wireless charging, the charging management module 140 may receive wireless charging input by using a wireless charging coil of the electronic device 100. The charging management module 140 may supply power to the electronic device by using the power management module 141 while charging the battery 142.

The power management module 141 is configured to connect the battery 142, the charging management module 140, and the processor 110. The power management module 141 receives input from the battery 142 and/or the charging management module 140, and supplies power to the processor 110, the internal memory 121, an external memory, the display screen 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may further be multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same device.

The wireless communication module 160 may provide a wireless communication solution that is applied to the electronic device 100 and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more devices that integrate at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric calculation, and render an image. The processor 110 may include one or more GPUs that execute program instructions to generate or change display information.

The display screen 194 is configured to display an image, a video, and the like. The display screen 194 includes a display panel. The display panel may use a liquid crystal display (liquid crystal display, LCD), an organic light-emitting diode (organic light-emitting diode, OLED), an active-matrix organic light-emitting diode or active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device 100 may include one or more display screens 194.

The display screen 194 of the electronic device 100 may be a flexible screen. Currently, the flexible screen attracts much attention due to unique features and huge potential of the flexible screen. Compared with a conventional screen, the flexible screen has features of strong flexibility and bendability, and can provide a user with a new interaction mode based on the feature of bendability, to meet more requirements of the user for an electronic device. For an electronic device configured with a foldable display screen, the foldable display screen on the electronic device may be switched between a small screen in a folded form and a large screen in an expanded form at any time. Therefore, the user uses a split-screen function more frequently on the electronic device configured with the foldable display.

Sensors inside the electronic device may include the camera 193, the microphone 170C, a pressure sensor 180A, a gyro sensor 180B, a barometric sensor 180C, a magnetic sensor 180D, an acceleration sensor 180E, a distance sensor 180F, a proximity sensor 180G, a fingerprint sensor 180H, a temperature sensor 180J, a touch sensor 180K, an ambient optical sensor 180L, a bone conduction sensor 180M, and the like.

The electronic device 100 can implement a photographing function by using the ISP, the camera 193, the video codec, the GPU, the display screen 194, the application processor, and the like.

The ISP is configured to process data fed back by the camera 193. For example, during photographing, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge coupled device, CCD) or a complementary metal-oxide-semiconductor (complementary metal-oxide-semiconductor, CMOS) photoelectric transistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into signals of some formats such as a standard RGB (R indicates red (red), G indicates green (green), and B indicates blue (blue)) format, and a YUV (Y indicates a luminance component, U\V indicates a chrominance component, U indicates blue, and V indicates red) format. In some embodiments, the electronic device 100 may include one or more cameras 193.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more types of video codecs. In this way, the electronic device 100 can play or record videos in a plurality of encoding formats, for example, moving picture experts group (moving picture experts group, MPEG) 1, MPEG 2, MPEG 3, and MPEG 4.

The microphone 170C is configured to capture audio. The microphone 170C may convert a captured sound signal into an electrical signal. In some examples, the microphone 170C may be used for functions such as calling, and recording. In some examples, the microphone 170C may further be configured to capture a voice instruction of the user.

The pressure sensor 180A is configured to sense a pressure signal, and can convert the pressure signal into an electrical signal. In some embodiments, the pressure sensor 180A may be disposed on the display screen 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on a capacitance change. When a touch operation is performed on the display screen 194, the electronic device 100 detects intensity of the touch operation by using the pressure sensor 180A. The electronic device 100 may further calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messaging application icon, an instruction for viewing an SMS message is executed. When a touch operation whose touch operation intensity is greater than or equal to the first pressure threshold is performed on the Messaging application icon, an instruction for creating a new SMS message is executed.

The gyro sensor 180B may be configured to determine a motion posture of the electronic device 100. In some embodiments, an angular velocity of the electronic device 100 around three axes (namely, axes X, Y, and Z) may be determined by using the gyro sensor 180B. The gyro sensor 180B may be configured to implement image stabilization during photographing. For example, when the shutter is pressed, the gyro sensor 180B detects an angle at which the electronic device 100 jitters, obtains, through calculation based on the angle, a distance for which a lens module needs to compensate, and allows the lens to cancel jitter of the electronic device 100 through reverse motion, to implement image stabilization. The gyro sensor 180B may be further used in a navigation scenario and a motion-sensing game scenario.

The acceleration sensor 180E may detect values of accelerations in various directions (usually on three axes) of the electronic device 100, and may detect a value and a direction of gravity when the electronic device 100 is still. The acceleration sensor 180E may be further configured to identify a posture of the electronic device, and is used in switching between a landscape mode and a portrait mode, and applications such as a pedometer.

The ambient optical sensor 180L is configured to sense ambient light brightness. The electronic device 100 may adaptively adjust brightness of the display screen 194 based on the sensed ambient light brightness. The ambient optical sensor 180L may further be configured to automatically adjust white balance during photographing. The ambient optical sensor 180L may further cooperate with the proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is less than another threshold, the electronic device 100 heats the battery 142, to avoid abnormal shutdown of the electronic device 100 due to a low temperature. In some other embodiments, when the temperature is less than still another threshold, the electronic device 100 boosts an output voltage of the battery 142, to avoid abnormal shutdown due to a low temperature.

The touch sensor 180K is also referred to as a "touch panel". The touch sensor 180K may be disposed on the display screen 194. The touch sensor 180K and the display screen 194 form a touchscreen, and the touchscreen is also referred to as a "touch control screen". The touch sensor 180K is configured to detect a touch operation performed on or near the touch sensor 180K. The touch sensor may transfer the detected touch operation to the application processor, to determine a type of a touch event. Visual output related to the touch operation may be provided by using the display screen 194. In some other embodiments, the touch sensor 180K may alternatively be disposed on a surface of the electronic device 100 at a location different from a location of the display screen 194.

The key 190 includes a power key, a volume key, and the like. The key 190 may be a mechanical key, or may be a touch-sensitive key. The electronic device 100 may receive key input, and generate key signal input related to user settings and function control of the electronic device 100.

The processor 110 may include a real-time response processor, configured to periodically drive each sensor in the sensor module, and process obtained information.

A camera is used as an example. The real-time response processor may periodically drive the camera to photograph a photo, and the camera sends the photographed photo to the real-time response processor through an interface. The real-time response processor may determine a change (for example, a change in brightness and darkness) in the photo from a previous moment to a next moment, and wake up a lower-level processor based on a determining result. The real-time response processor may send the obtained photo to the lower-level processor (for example, a central processing unit (central processing unit, CPU) or the GPU), to perform a corresponding operation (for example, adjust screen brightness).

A microphone is used as an example. The real-time response processor may periodically drive the microphone to capture audio, and the microphone sends the captured audio to the real-time response processor through an interface. The real-time response processor may determine whether sound (for example, a human voice) at a specific frequency appears in the audio, and wake up a lower-level processor based on a determining result. The real-time response processor may send the obtained audio to the lower-level processor (for example, a speech recognition module in the CPU), to perform a corresponding operation (for example, execute a voice instruction included in the audio).

An acceleration sensor is used as an example. The real-time response processor may periodically drive the acceleration sensor, and the acceleration sensor may determine an orientation of the electronic device, and send orientation information to the real-time response processor. The real-time response processor may determine whether the electronic device is in motion, and wake up a lower-level processor based on a determining result. The real-time response processor may send the obtained orientation information to the lower-level processor (for example, a step counting module in the CPU), to perform a corresponding operation (for example, record a quantity of steps taken by the user).

A fingerprint sensor is used as an example. The real-time response processor may periodically drive the fingerprint sensor, and the fingerprint sensor may send a detected signal to the real-time response processor, so that the real-time response processor may determine whether a finger touches the fingerprint sensor, and wake up a lower-level processor based on a determining result. The real-time response processor may send the obtained fingerprint information to the lower-level processor (for example, a fingerprint recognition module in the CPU), to perform a corresponding operation (for example, turn on a screen).

A key is used as an example. The real-time response processor may periodically drive the key, and the key may send a detected signal to the real-time response processor, so that the real-time response processor may determine whether a keyboard is pressed by the user, and wake up a lower-level processor based on a determining result. The real-time response processor may send the obtained key operation information to the lower-level processor (for example, the CPU), to perform a corresponding operation (for example, turn on the screen).

As described above, a task that the real-time response processor can process is relatively simple, and data can be transmitted to a lower-level processor only when changed information is identified. On one hand, the real-time response processor has a very limited identification capability and a limited amount of information that can be identified, and cannot identify a complex environment to adjust a working state of the electronic device. On the other hand, the real-time response processor may incorrectly determine obtained partial information, resulting in mistakenly triggering another processor. Consequently, the electronic device consumes power meaninglessly. In addition, it is assumed that the electronic device includes processors that can identify the complex environment. However, calculation amounts of these processors are large. In addition, starting these processors usually requires cooperation of a plurality of hardware, and needs to start a plurality of software programs. This is not conducive to responding to a change of an external environment in a timely manner. Because the real-time response processor has features of a low identification capability and low power consumption, the real-time response processor cannot directly start these processors. To further improve user experience of the electronic device and implement artificial intelligence, this application provides an integrated chip, to improve a real-time response capability of the electronic device.

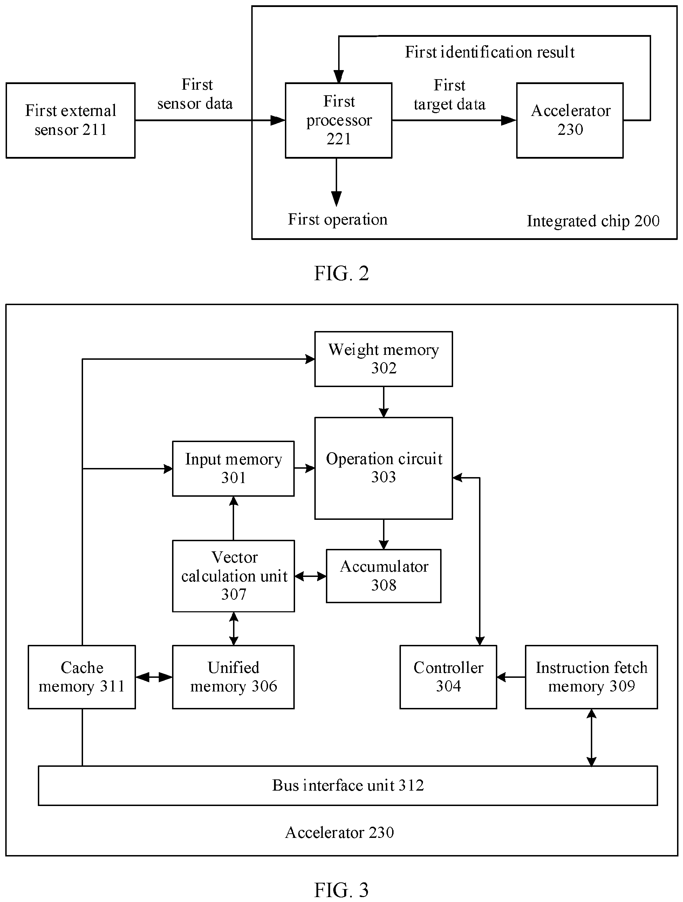

FIG. 2 is a schematic diagram of interaction between an integrated chip and a sensor according to this application. The integrated chip 200 may be used in the electronic device 100 shown in FIG. 1. The integrated chip 200 may replace the processor 110 in the electronic device 100 shown in FIG. 1.

The integrated chip 200 includes a first processor 221. The first processor 221 is configured to obtain first sensor data from a first external sensor 211, and extract first target data from the first sensor data. The first processor 221 is a real-time response processor. The integrated chip 200 further includes an accelerator 230. The accelerator 230 is configured to identify the first target data based on a first neural network model to obtain a first identification result, where the first identification result is used to determine a target operation corresponding to the first identification result.

The integrated chip 200 may also be referred to as a system on a chip (system on a chip, SOC), or may be a part of a system on a chip.

The foregoing has described a plurality of possible implementations in which the real-time response processor responds to the external sensor. Details are not described herein again.

FIG. 3 is a schematic structural diagram of an accelerator 230. A core part of the accelerator 230 is an operation circuit 303, and a controller 304 controls the operation circuit 303 to extract data in a memory (a weight memory or an input memory) and perform an operation. In some implementations, the operation circuit 303 includes a plurality of process engines (Process Engine, PE). In some implementations, the operation circuit 303 is a two-dimensional systolic array. The operation circuit 303 may alternatively be a one-dimensional systolic array or another electronic circuit that can perform mathematical operations such as multiplication and addition. In some implementations, the operation circuit 303 is a general-purpose matrix processor. For example, it is assumed that there are an input matrix A, a weight matrix B, and an output matrix C. The operation circuit fetches, from a weight memory 302, data corresponding to the matrix B, and buffers the data on each PE of the operation circuit. The operation circuit fetches data of the matrix A from an input memory 301, to perform a matrix operation on the matrix B, and stores an obtained partial result or an obtained final result of the matrix into an accumulator (accumulator) 308.

A vector calculation unit 307 may perform further processing such as vector multiplication, vector addition, an exponent operation, a logarithmic operation, or value comparison on output of the operation circuit 303. For example, the vector calculation unit 307 may be configured to perform network calculation, such as pooling (Pooling), batch normalization (Batch Normalization), or local response normalization (Local Response Normalization), at a non-convolutional/non-FC layer in a neural network. In some implementations, the vector calculation unit 307 can store a processed output vector into a unified memory 306. For example, the vector calculation unit 307 may apply a non-linear function to the output of the operation circuit 303. For example, the non-linear function is applied to a vector of an accumulated value to generate an activation value. In some implementations, the vector calculation unit 307 generates a normalized value, a combined value, or both. In some implementations, a processed output vector can be used as activation input to the operation circuit 303, for example, the processed output vector can be used at a subsequent layer in the neural network. Some or all steps of the method provided in this application may be performed by the operation circuit 303 or the vector calculation unit 307.

The unified memory 306 is configured to store input data and output data. A bus interface unit 312 transfers input data in a cache memory 311 to the input memory 301 and/or the unified memory 306, stores weight data in the cache memory 311 into the weight memory 302, and stores data in the unified memory 306 into the cache memory 311.

The bus interface unit (Bus Interface Unit, BIU) 312 is configured to implement interaction between a first processor 310 and an instruction fetch buffer 309 through a bus. The instruction fetch buffer (instruction fetch buffer) 309 connected to the controller 304 is configured to store instructions to be used by the controller 304. The controller 304 is configured to invoke the instructions buffered in the instruction fetch buffer 309, to control a working process of the operation accelerator 230. Generally, the unified memory 306, the input memory 301, the weight memory 302, the cache memory 311, and the instruction fetch buffer 309 are all on-chip (On-Chip) memories.

It should be understood that a person skilled in the art may associate another possible structure of the accelerator 230 based on a structure of the accelerator 230 shown in FIG. 3. It may be understood that the embodiment shown in FIG. 3 is merely intended to help the person skilled in the art better understand technical solutions of this application, but is not intended to limit the technical solutions of this application. Modifications and other embodiments of this application will come to mind to the person skilled in the art having a benefit of guidance presented in the foregoing descriptions and related accompanying drawings. Therefore, it should be understood that this application is not limited to the specific embodiments disclosed.

The first processor 221 may include a plurality of processing units. The processing unit may be a logical processing unit or a physical processing unit. In other words, the first processor 221 may be divided into the plurality of processing units through an algorithm. Alternatively, the first processor 221 includes a plurality of processing units that are physically disassembled. The plurality of processing units collaborate to process data.

The first external sensor 211 may be, for example, one of the camera 193, the microphone 170C, the pressure sensor 180A, the gyro sensor 180B, the barometric sensor 180C, the magnetic sensor 180D, the acceleration sensor 180E, the distance sensor 180F, the proximity sensor 180G, the fingerprint sensor 180H, the temperature sensor 180J, the touch sensor 180K, the ambient optical sensor 180L, and the bone conduction sensor 180M shown in FIG. 1.

In an example, the first processor 221 may perform target data extraction on sensor data obtained by a plurality of external sensors.

For example, the first processor 221 may perform target data extraction on a photo captured by the camera and audio captured by the microphone.

In one case, a first processing unit in the first processor 221 may perform target data extraction on the photo captured by the camera, and a second processing unit in the first processor 221 may perform target data extraction on the audio captured by the microphone.

In another case, the first processing unit in the first processor 221 may perform target data extraction on the photo captured by the camera, and may perform target data extraction on the audio captured by the microphone.

In an example, the first processor 221 may perform target data extraction on sensor data obtained by only one external sensor. For example, the first processor 221 performs target data extraction only on the photo captured by the camera. When the first processor 221 includes the plurality of processing units, a processing unit A and a processing unit B may simultaneously perform target data extraction on different photos. Alternatively, the processing unit A and the processing unit B may simultaneously perform target data extraction on different parts of a same photo.

"The target data extraction" in this application may be interpreted as extracting a part of information obtained by the external sensor. The information extracted by the first processor 221 may be equivalent to "features". The extracted information may be used for further processing. In other words, the first processor 221 removes some data from the information obtained by the external sensor, and remaining data may be further identified. The first processor 221 may perform the target data extraction according to a preset rule, and data that meets the preset rule is extracted. When no preset rule exists, the first processor 221 may send all data obtained by the external sensor to the accelerator 230.

For example, when the external sensor is a camera, the extracted information may be pixels constituting a person. In other words, pixels that do not constitute the person in an image may be removed. In other words, the preset rule may be "pixels constituting a person". For another example, when the external sensor is the camera, the extracted information may be a video including several frames of images, where an object in the video moves within the several frames, and the object does not move before the several frames. In other words, a picture in which no object moves in the video may be removed. In other words, the preset rule may be "a picture in which an object in motion exists."

For example, when audio data is extracted by the external sensor, the extracted information may be data of a particular frequency band. In other words, audio data that is not of a specific frequency band in audio may be removed. In other words, the preset rule may be "audio data of a specific frequency band".

For example, when the external sensor is an acceleration sensor, the extracted information may be a process of changing an orientation of the electronic device. In other words, when the orientation of the electronic device does not change, data captured by the acceleration sensor may be removed. In other words, the preset rule may be "an orientation signal whose change speed is greater than a preset value".

For example, when the external sensor is a fingerprint sensor, the extracted information may be a captured fingerprint signal. In other words, when the electronic device detects no fingerprint, data captured by the fingerprint sensor may be removed. In other words, the preset rule may be "a signal value captured when a finger is detected."

For example, when the external sensor is a key, the extracted information may be a pressed key and an order in which keys are pressed. In other words, when the electronic device does not detect that the user presses the key, data captured by the key may be removed. In other words, the preset rule may be "a signal value captured when a key is pressed."

The accelerator 230 may also be referred to as a neural network accelerator 230, and is an apparatus or module that has a computing capability and can execute a neural network model. In the field of neural networks or data processing, the accelerator 230 is sometimes referred to as a classifier (classifier). For example, the accelerator 230 may be a neural-network (neural-network, NN) computing processor.

The neural network model is a mathematical model that includes a neural network. The neural network model may be stored in a storage medium in a form of an algorithm, code, or the like.

A neural-network processing unit (Neural-network Processing Unit, NPU) is a neural-network (neural-network, NN) computing processor. The neural-network processing unit processes input information quickly by drawing on a structure of a biological neural network, for example, by drawing on a transmission mode between human brain neurons, and may further continuously perform self-learning. Applications such as intelligent cognition of the electronic device may be implemented through the NPU, for example, image recognition, facial recognition, speech recognition, and text understanding.

The accelerator 230 may execute one or more neural network models.

In one example, one neural network model corresponds to one external sensor. In other words, one neural network model can process only data from a specific type of external sensor.

For example, when the first target data includes image information, the accelerator 230 may execute a neural network model used for image processing, and an obtained identification result may be labels of an image and a probability to which each label belongs. The labels of the image may be "man", "woman", "beard", "long hair", "day", "night", "indoor", "outdoor", "meeting room", "inside a car", and the like. The labels of the image may be features of the first target data.

For example, when the first target data includes audio information, the accelerator 230 may execute a neural network model used for audio processing, and an obtained identification result may be voice instructions and a probability to which each voice instruction belongs. The voice instructions may be "making a call", "holding a meeting", "querying weather", and the like. The voice instructions may be features of the first target data.

For example, when the first target data includes orientation information, the accelerator 230 may execute a neural network model used for orientation information processing, and an obtained identification result may be an angle range of flipping of the electronic device and a probability to which the angle range belongs. The angle range of flipping of the electronic device may be 360° to 720° clockwise. The angle range of flipping of the electronic device may be a feature of the first target data.

For example, when the first target data includes fingerprint information, the accelerator 230 may execute a neural network model used for fingerprint matching, and an obtained identification result may be fingerprint types and a probability to which each fingerprint type belongs. The fingerprint types may be a thumb fingerprint, a ring finger fingerprint, and the like. The fingerprint types may be features of the first target data.

For example, when the first target data includes key information, the accelerator 230 may execute a neural network model used for touch processing, and an obtained identification result may be touch instructions and a probability to which each touch instruction belongs. The touch instructions may be "false impact", "capturing a screenshot", and the like. The touch instructions may be features of the first target data.

In one example, one neural network model corresponds to a plurality of external sensors. In other words, one neural network model can process data from various types of external sensors.

For example, when there is a correlation between video information captured by the camera and audio information captured by the microphone, a neural network model capable of identifying both the video information and the audio information may be used.

The accelerator 230 obtains the first identification result, and sends the first identification result to another processor, so that the another processor may determine the target operation corresponding to the first identification result.

In one case, the target operation may be maintaining a current status of the electronic device. In another case, the target operation may be waking up a third processor in the electronic device, so that the third processor switches from a sleep state to a working state. The target operation further includes sending information such as the first target data, the first identification result, and instructions to the third processor. In another case, if the invoked third processor is a real-time response processor, the third processor may not be woken up, and the instructions or data may be directly sent to the third processor. The third processor may respond to the instructions or the data in real time. The third processor may alternatively be a processor on the integrated chip 200.

The another processor may determine a final identification result based on the first identification result. It is assumed that the first identification result includes a feature A, a feature B, a feature C. A probability of the feature A is 50%, a probability of the feature B is 30%, and a probability of the feature C is 20%. This means that a probability that the first target data belongs to the feature A is 50%, a probability that the first target data belongs to the feature B is 30%, and a probability that the first target data belongs to the feature C is 20%. In a manner of determining the final identification result, an identification result with a maximum probability value is used as the final identification result, that is, the first target data belongs to the feature A. In another manner of determining the final identification result, when the feature A, the feature B, and the feature C are all numerical values, a weighted average value of the feature A, the feature B, and the feature C is obtained, where weights are probability values corresponding to the features. That is, the first target data belongs to (feature A × 0.5 + feature B × 0.3 + feature C × 0.2)/3. In another manner of determining the final identification result, a plurality of features with relatively large probability values are used as final identification results, for example, the feature A and the feature B are used as the final identification results.

The final identification result may be associated with the target operation by using an algorithm or code. For example, when the final identification result is an identification result A, it may be determined that the target operation corresponding to the first identification result is an operation B.

For example, when the first target data is a photo, when determining that the first target data includes the "indoor" label, the processor may start the wireless communication module to connect to the Wi-Fi or the Bluetooth.

For example, when the first target data is audio, when determining that the first target data includes the "meeting" label, the processor may start a recording application program to record content of the meeting.

For example, when the first target data is an orientation, when determining that the first target data corresponds to an identification result of "flipping 360° to 720° clockwise", the processor may start an anti-drop application program.

For example, when the first target data is a fingerprint, when determining that the first target data corresponds to an identification result of "ring finger fingerprint", the processor may start an application program corresponding to the ring finger fingerprint.

For example, when the first target data is key information, when determining that the first target data includes a touch instruction of "false impact", the processor may ignore the key operation, and switch some modules in the electronic device to sleep states.

It is worth mentioning that while a conventional NPU processor is capable of carrying a heavy and complex program, but requires multi-level programs or a plurality of hardware to wake up and mobilize the entire system (for example, the NPU functions as a collaborative processor, and the CPU is responsible for scheduling tasks). An external storage device (for example, a double data rate (Double Data Rate, DDR) memory) is further required. The conventional NPU cannot perform a high-frequency and real-time response to data sent by the real-time response processor, in other words, the real-time response processor cannot mobilize the conventional NPU processor in real time. In addition, when the conventional NPU processor carries the heavy and complex program, power consumption of the conventional NPU processor is high. In this application, a computing capability of the accelerator 230 may be weaker than a computing capability of the conventional NPU processor. In this application, a neural network model executed by the accelerator 230 may be simplified.

Reducing a computing capability of the processor may be, for example, reducing computing precision of the processor from a hexadecimal system to an octal system.

The neural network model is simplified. For example, some layers such as a convolutional layer, a pooling layer, and a neural network layer may be removed from a trained neural network model. For another example, a quantity of neurons in each layer of the neural network model may be reduced. A simplified neural network model needs to be retrained.

In addition, the conventional NPU processor needs to be configured with an external memory (for example, the DDR memory), to provide storage space for data identification. In this application, to enable the real-time response processor to quickly mobilize the accelerator 230, the accelerator 230 may further include a memory. The memory stores instructions for executing the neural network model. The accelerator 230 may store the first target data sent by the real-time response processor, and provide data processing storage space for the accelerator 230 to identify the first target data. That is, the accelerator 230 may include the processor and the memory, or include a processor having a data storage function. In other words, in addition to an integrated processor, the integrated chip 200 is further integrated with an apparatus or module having a storage function.

Optionally, the accelerator 230 includes a cache memory, configured to store intermediate data generated in a process of executing the first neural network model.

It should be understood that a larger neural network model that can be executed by the accelerator 230 indicates a larger storage amount of the memory in the accelerator 230. Frequent use of the accelerator 230 causes a problem of power consumption. However, a simpler neural network model indicates more inaccurate identification result generated by the accelerator 230.

In addition, the accelerator 230 may be upgraded by updating the neural network model, so that the accelerator 230 can process more tasks. The accelerator 230 differs from a common processor in that, when the common processor does not use a neural network model, the common processor completes a data processing process by executing an algorithm or code. Improvement space of the algorithm and the code is limited, and an update difficulty is relatively high. This is not conducive to artificial intelligence of the electronic device, and is not conducive to improving user experience of the electronic device. Updating the accelerator 230 in this application may be adding or deleting a neural network model, or may be updating parameters in the neural network model. Therefore, an updating manner of the accelerator 230 in this application is relatively simple and convenient for execution.

Optionally, parameters in the first neural network model are updated by using a network.

The parameters in the first neural network model may be, for example, a weight parameter, a neuron activation/inactivation parameter, and the like.

Optionally, the first processor 221 is further configured to determine, based on the first identification result, the target operation corresponding to the first identification result.

In other words, the first processor 221 that responds in real time processes the first identification result, and determines the target operation that responds to the first identification result. In other words, the first processor 221 includes not only a processing unit that can drive the external sensor in real time, but also a processing unit that can respond to sensor data in real time. In addition, the first processor 221 includes a processing unit that can respond to an identification result obtained by the accelerator 230. FIG. 2 shows data flows that are transferred by the first external sensor 211, the first processor 221, and the accelerator 230.

Optionally, the integrated chip 200 further includes a second processor 222, configured to determine, based on the first identification result, the target operation corresponding to the first identification result.

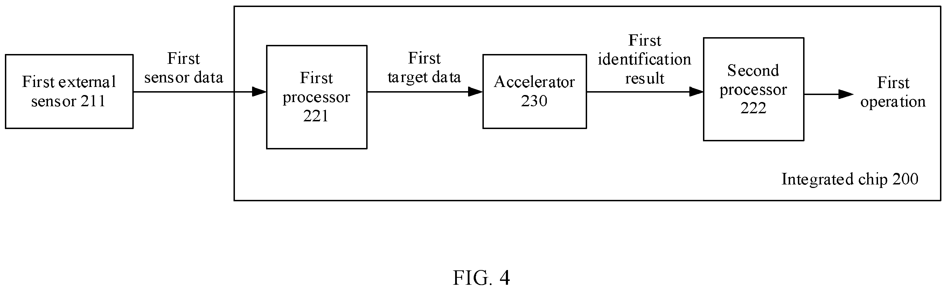

That is, the second processor 222 different from the first processor 221 processes the first identification result, and determines the target operation that responds to the first identification result. In other words, the second processor 222 includes a processing unit that may respond to the accelerator 230. FIG. 4 to FIG. 7 are schematic diagrams of interaction between the integrated chip 200 and the external sensor according to this application.

FIG. 4 shows data flows that are transferred by the first external sensor 211, the first processor 221, the accelerator 230, and the second processor 222.

For ease of description, a case in which the accelerator 230 sends the identification result to the second processor 222 is used as an example for description below. It should be understood that, modifications and other embodiments of this application will come to mind to the person skilled in the art having the benefit of the guidance presented in the foregoing descriptions and the related accompanying drawings, for example, a solution in which the accelerator 230 sends the identification result to the first processor 221. Therefore, it should be understood that this application is not limited to the specific embodiments disclosed.

Optionally, the first processor 221 is further configured to: after extracting the first feature data, indicate the second processor 222 to switch from a sleep state to a working state. The second processor 222 is specifically configured to: when being in the working state, determine the target operation based on the first identification result.

In other words, the second processor 222 may not be a real-time response processor. In this embodiment of this application, because the accelerator 230 has a relatively strong computing capability and a relatively fast computing speed, after the first processor 221 extracts the feature data, the first processor 221 may wake up the second processor 222, so that the second processor 222 is in the working state and responds to the identification result sent by the accelerator 230. Because the second processor 222 may not need to be in a real-time online state, energy consumption is reduced.

Optionally, the first processor 221 is further configured to: obtain second sensor data from a second external sensor 212, and extract second target data from the second sensor data. The accelerator 230 is further configured to identify the second target data based on a second neural network model to obtain a second identification result, where the second identification result and the first identification result are used to determine the target operation together.

Optionally, the second processor 222 is specifically configured to determine the target operation based on the first identification result and the second identification result.

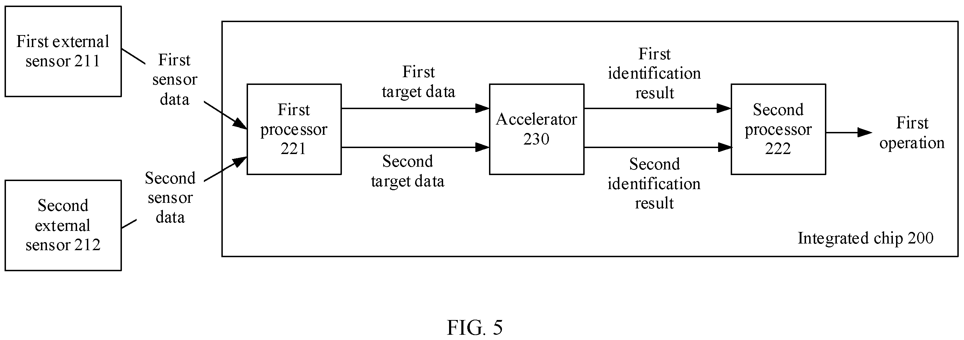

FIG. 5 shows data flows that are transferred by the first external sensor 211, the second external sensor 212, the first processor 221, the accelerator 230, and the second processor 222. That is, the two different external sensors respectively capture the first sensor data and the second sensor data, the first processor 221 extracts the first target data from the first sensor data, the first processor 221 extracts the second target data from the second sensor data. The accelerator 230 identifies the first target data by using the first neural network model, and identifies the second target data by using the second neural network model. There is an association relationship or correspondence between the first neural network model, a type of the first target data, and the first external sensor 211. There is an association relationship or correspondence between the second neural network model, a type of the second target data, and the second external sensor 212. The second processor 222 may determine the target operation based on the first identification result and the second identification result.

In an example, the second processor 222 may be a real-time response processor. The second processor 222 may respond in real time to the identification result sent by the accelerator 230.

In an example, the second processor 222 may be not a real-time response processor, that is, the second processor 222 includes the working state and the sleep state. The first processor 221 may wake up the second processor 222 while sending the first target data to the accelerator 230. Alternatively, the accelerator 230 wakes up the second processor 222. Alternatively, the integrated chip 200 further includes a controller 240, and the controller 240 wakes up the second processor 222. If the second processor 222 does not receive a new identification result within a period of time, the second processor 222 may switch to the sleep state. Alternatively, the second processor 222 may switch from the working state to the sleep state in response to indication of the first processor 221 or indication of the controller 240.

The following uses three scenarios as an example for description. It should be understood that, modifications and other embodiments of this application will come to mind to the person skilled in the art having the benefit of the guidance presented in the foregoing descriptions and the related accompanying drawings. Therefore, in addition to the scenarios provided in this application, the integrated chip 200 may be further applied to other scenarios. It should be understood that this application is not limited to the specific embodiments disclosed.

### Scenario 1

The first external sensor 211 is a camera, and the second external sensor 212 is a microphone. The first processor 221 periodically drives the camera to capture image information. The first processor 221 periodically drives the microphone to capture audio information. The first processor 221 continuously monitors image information sent by the camera and audio information sent by the microphone. When the first processor 221 detects that a human voice appears in audio, the first processor 221 intercepts image information obtained in an occurrence time period of the human voice as the first target data, and intercepts audio information obtained in the occurrence time period of the human voice as the second target data. The first processor 221 sends the first target data and the second target data to the accelerator 230.

The accelerator 230 may identify the first target data by using the first neural network model, to obtain the first identification result. The first neural network model may be an image processing neural network model, and the first identification result may be a "night" image label or an "outdoor" image label. The accelerator 230 may identify the second target data by using the second neural network model, to obtain the second identification result. The second neural network model may be a speech recognition neural network model, and the second identification result may be a "screaming" audio label.

The accelerator 230 sends the first identification result including the "night" image label and the "outdoor" image label and the second identification result including the "screaming" audio label to the second processor 222. The second processor 222 may determine, based on identification results of the "night" image label, the"outdoor" image label, and the "screaming" audio label, the target operation, for example, drive the electronic device to enter an emergency safety mode, and remind a user who is using the electronic device to report an alarm or ask for help.

In other words, when the user screams, the electronic device may save an image captured by the camera. In addition, the electronic device may start an alarm reminder interface, so that the user quickly obtains help in an emergency.

### Scenario 2

The first external sensor 211 is a microphone, and the second external sensor 212 is a touch sensor. The first processor 221 periodically drives the microphone to capture audio information. The first processor 221 periodically drives the touch sensor to capture gesture operation information. The first processor 221 continuously monitors audio information sent by the microphone and gesture operation information sent by the touch sensor. When the first processor 221 detects that a human voice appears in audio, and a gesture operation signal fluctuates, the first processor 221 intercepts audio information as the first target data, and intercepts gesture operation information as the second target data. The first processor 221 sends the first target data and the second target data to the accelerator 230.

The accelerator 230 may identify the first target data by using the first neural network model, to obtain the first identification result. The first neural network model may be a speech recognition neural network model, and the first identification result may be a "meeting minutes" audio label. The accelerator 230 may identify the second target data by using the second neural network model, to obtain the second identification result. The second neural network model may be a gesture operation neural network model, and the second identification result may be a "touching an area A" label.

The accelerator 230 sends the first identification result including the "meeting minutes" label and the second identification result including the "touching an area A" label to the second processor 222. The second processor 222 may determine, based on identification results of the "meeting minutes" label and the "touching an area A" label, the target operation, for example, drive the electronic device to enter a meeting mode, start a recording program, and start a note recording program.

In other words, when the user touches the area A on a screen for a long time and speaks a meeting-related voice to the electronic device, the electronic device may determine that the user is sending an instruction, and may quickly identify the instruction included in the voice, to quickly respond to an operation of the user.

### Scenario 3

The first external sensor 211 is an ambient optical sensor, and the second external sensor 212 is an acceleration sensor. The first processor 221 periodically drives the ambient optical sensor to capture light intensity information. The first processor 221 periodically drives the acceleration sensor to capture orientation information of the electronic device. The first processor 221 continuously monitors light intensity information sent by the ambient optical sensor and orientation information sent by the acceleration sensor. When the first processor 221 detects that the orientation information changes, the first processor 221 intercepts light intensity information as the first target data, and intercepts orientation information as the second target data. The first processor 221 sends the first target data and the second target data to the accelerator 230.

The accelerator 230 may identify the first target data by using the first neural network model, to obtain the first identification result. The first neural network model may be a light signal processing neural network model, and the first identification result may be a "turning from light to dark" label. The accelerator 230 may identify the second target data by using the second neural network model, to obtain the second identification result. The second neural network model may be a rotation angle identification neural network model, and the second identification result may be a "running" label.

The accelerator 230 sends the first identification result including the "turning from light to dark" label and the second identification result including the "running" label to the second processor 222. The second processor 222 may determine, based on to identification results of the "turning from light to dark" label and the "running" label, the target operation, for example, drive the electronic device to enter a motion recording mode, turn off the touch sensor, and turn off the display screen.

In other words, when the user puts a mobile phone into a pocket or backpack, the electronic device determines, based on information captured by the accelerator 230, whether the user is in motion. If the user is in motion, the electronic device may turn off the screen, to prevent the user from turning on the screen for a long time due to accidental touch when the user is in motion. In addition, even if the user does not start any motion recording program, the electronic device may automatically trigger recording of motion data of the user.

It should be understood that the accelerator 230 may process data captured by more external sensors.

Optionally, the accelerator 230 may identify the first target data and the second target data in a time-sharing manner.

For example, the first target data is identified at a first moment, and after the first target data is identified, the second target data is identified.

The accelerator 230 may determine an identification sequence of the first target data and the second target data based on a receiving sequence of the first target data and the second target data. The accelerator 230 may alternatively determine the identification sequence of the first target data and the second target data based on priorities of the first external sensor 211 and the second external sensor 212.

Optionally, the first processor 221 is further configured to determine a first priority corresponding to the first target data and a second priority corresponding to the second target data.

The first priority and the second priority may be a sequence in which the first processor 221 sends the first target data and the second target data. The first priority and the second priority may be a sequence in which the first processor 221 extracts the data from the first sensor data and the second sensor data.

The first processor 221 may determine a sending sequence of the first target data and the second target data based on a receiving sequence of the first sensor data and the second sensor data. Alternatively, the first processor 221 may determine the first priority and the second priority based on the priorities of the first external sensor 211 and the second external sensor 212. For example, a priority of information captured by the camera is higher than a priority of information captured by the microphone.

Optionally, the first processor 221 is further configured to send the first target data and the second target data to the accelerator 230 in a time-sharing manner.

Optionally, the integrated chip 200 further includes: the controller 240, configured to determine the first priority corresponding to the first target data and the second priority corresponding to the second target data. The accelerator 230 is specifically configured to identify, based on the first priority and the second priority, the first target data and the second target data in a time-sharing manner.

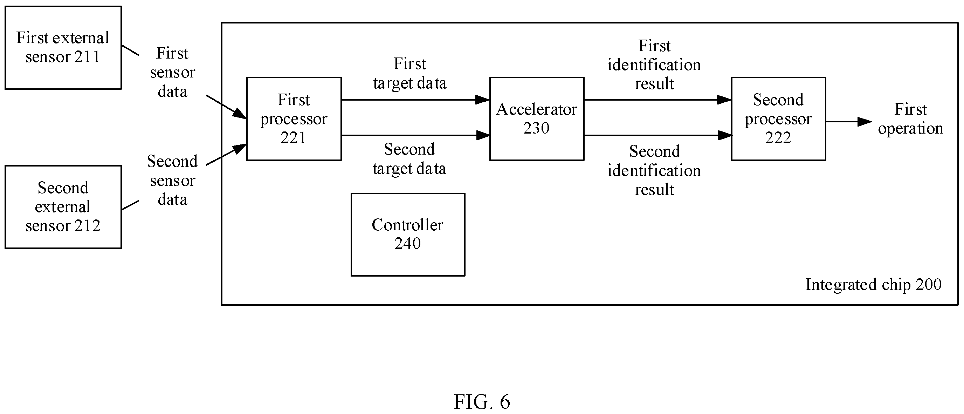

As shown in FIG. 6, the integrated chip 200 may further include the controller 240. In other words, the integrated chip 200 may further include the controller 240 configured to schedule data, and the controller 240 determines a sequence in which the accelerator 230 identifies the data. Before the accelerator 230 identifies the first target data and the second target data, the controller 240 determines that a priority of the first target data is the first priority, and a priority of the second target data is the second priority, so that the accelerator 230 identifies the first target data and the second target data based on the priorities.

In an example, the controller 240 sends the first priority corresponding to the first target data and the second priority corresponding to the second target data to the accelerator 230, and the accelerator 230 determines, based on the first priority and the second priority, to identify the first target data and the second target data in a time-sharing manner.

In an example, the controller 240 controls the first processor 221 to send the first target data and the second target data to the accelerator 230 in a time-sharing manner. Therefore, the accelerator 230 may identify the first target data and the second target data in a time-sharing manner based on the receiving sequence.

In an example, at the first moment, the accelerator 230 receives the first target data, and identifies the first target data. At the second moment at which the accelerator 230 has not completed identifying the first target data, the accelerator 230 receives the second target data whose priority is higher than the priority of the first target data, and the accelerator 230 may interrupt a process of identifying the first target data, and preferably identify the second target data.

Optionally, the first processor 221 is further configured to determine a third identification result based on the first sensor data, where the third identification result and the first identification result are used to determine the target operation together.

Optionally, the first processor is further configured to determine the target operation based on the first identification result and the third identification result.

That is, a simple task can be handed over to the first processor 221 for processing, and a complex task can be handed over to the accelerator 230 for processing. The first processor 221 that responds in real time may identify the first sensor data to obtain the third identification result, and determine, in response to the first identification result sent by the accelerator, the target operation that responds to the first identification result and the third identification result.

Optionally, the first processor 221 is further configured to determine the third identification result based on the first sensor data. The second processor 222 is specifically configured to determine the target operation based on the first identification result and the third identification result.

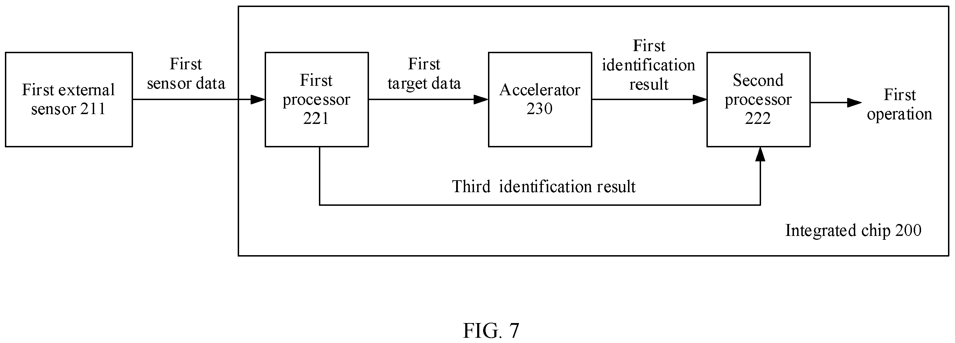

In other words, the first processor 221 that responds in real time may identify the first sensor data, to obtain the third identification result. The second processor 222 processes the first identification result and the third identification result, and determines the target operation that responds to the first identification result and the third identification result. In other words, the simple task can be handed over to the first processor 221 for processing, and the complex task can be handed over to the accelerator 230 for processing. The second processor 222 includes a processing unit that can respond to the accelerator 230 and the first processor 221. FIG. 7 shows the data flows that are transferred by the first external sensor 211, the first processor 221, the accelerator 230, and the second processor 222.

The camera is used as an example. The real-time response processor may periodically drive the camera to photograph a photo, and the camera sends the photographed photo to the real-time response processor through the interface. The real-time response processor may determine the change in the photo from the previous moment to the next moment to obtain a determining result that whether a change of turning from light to dark happens, and sends image information of a same time period to the accelerator 230. The accelerator 230 processes the image information to obtain labels of an image and a probability to which each label belongs. The second processor 222 may perform a corresponding operation based on identification results sent by the first processor 221 and the accelerator 230. For example, if the first identification result includes the "indoor" label, and the third identification result is that the change of turning from light to dark happens, the second processor 222 may start a program used to remind the user to start a lighting device.

The microphone is used as an example. The real-time response processor may periodically drive the microphone to capture audio, and the microphone sends the captured audio to the real-time response processor through the interface. The real-time response processor may determine whether a voice of an owner appears in the audio, and send audio information of a same time period to the accelerator 230. The accelerator 230 processes the audio information to obtain voice instructions and a probability to which each voice instruction belongs. The second processor 222 may perform a corresponding operation based on identification results sent by the first processor 221 and the accelerator 230. For example, if the first identification result includes the voice instruction of "making a call", and the third identification result does not include the voice of the owner, the second processor 222 may start a program for locking the electronic device, and prompt a user who is using the electronic device to unlock the electronic device.

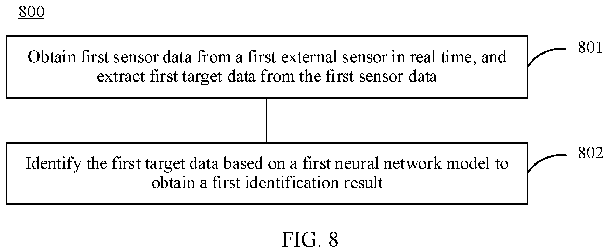

FIG. 8 is a schematic flowchart of a sensor data processing method according to this application. A method 800 shown in FIG. 8 may be executed by the processor 110 in FIG. 1 or the integrated chip 200 shown in FIG. 2.

801: Obtain first sensor data from a first external sensor in real time, and extract first target data from the first sensor data.

Optionally, the first external sensor includes one of a camera, a microphone, a motion sensor, a distance sensor, an ambient optical sensor, a magnetic field sensor, a fingerprint sensor, or a temperature sensor.

The first external sensor may be, for example, one of the camera 193, the microphone 170C, the pressure sensor 180A, the gyro sensor 180B, the barometric sensor 180C, the magnetic sensor 180D, the acceleration sensor 180E, the distance sensor 180F, the proximity sensor 180G, the fingerprint sensor 180H, the temperature sensor 180J, the touch sensor 180K, the ambient optical sensor 180L, and the bone conduction sensor 180M shown in FIG. 1.

"Target data extraction" in this application may be interpreted as extracting a part of information obtained by an external sensor. The extracted information may be equivalent to "features". The extracted information may be used for further processing. In other words, some data may be removed from the information obtained by the external sensor, and the remaining data may be further identified. In one manner, the target data extraction is performed according to a preset rule, and data that meets the preset rule is extracted. When no preset rule exists, all data obtained by the external sensor may be sent to an accelerator.

Step 801 may be performed by the first processor in the integrated chip shown in FIG. 2.

802: Identify the first target data based on a first neural network model to obtain a first identification result, where the first identification result is used to determine a target operation corresponding to the first identification result.

The accelerator in the integrated chip shown in FIG. 2 may be configured to identify the first target data based on the first neural network model, to obtain the first identification result.

The neural network model is a mathematical model that includes a neural network. The neural network model may be stored in a storage medium in a form of an algorithm, code, or the like. A concept of the neural network is described above, and details are not described herein again. In this application, the neural network model executed by the accelerator may be simplified. The neural network model is simplified. For example, some layers such as a convolutional layer, a pooling layer, and a neural network layer may be removed from a trained neural network model. For another example, a quantity of neurons in each layer of the neural network model may be reduced. A simplified neural network model needs to be retrained.

The first identification result may be obtained based on the first neural network model. The target operation corresponding to the first identification result may be determined based on the first identification result.

The another processor may determine a final identification result based on the first identification result. It is assumed that the first identification result includes a feature A, a feature B, a feature C. A probability of the feature A is 50%, a probability of the feature B is 30%, and a probability of the feature C is 20%. This means that a probability that the first target data belongs to the feature A is 50%, a probability that the first target data belongs to the feature B is 30%, and a probability that the first target data belongs to the feature C is 20%. In a manner of determining the final identification result, an identification result with a maximum probability value is used as the final identification result, in other words, the first target data belongs to the feature A. In another manner of determining the final identification result, when the feature A, the feature B, and the feature C are all numerical values, a weighted average value of the feature A, the feature B, and the feature C is obtained, where weights are probability values corresponding to the features. That is, the first target data belongs to (feature A × 0.5 + feature B × 0.3 + feature C × 0.2)/3. In another manner of determining the final identification result, a plurality of features with relatively large probability values are used as final identification results, for example, the feature A and the feature B are used as the final identification results.

The final identification result may be associated with the target operation by using an algorithm or code.

Optionally, the method further includes: performing the target operation.

In one case, the target operation may be maintaining a current status of an electronic device. In another case, the target operation may be waking up the another processor in the electronic device, so that the another processor switches from a sleep state to a working state. The target operation further includes sending information such as the first target data, the first identification result, and instructions to the another processor. The another processor that is woken up may be a real-time response processor.

Optionally, the method further includes: determining the target operation based on the first identification result.

A processor that responds to the first external sensor in real time processes the first identification result, and determines the target operation that responds to the first identification result. In other words, an apparatus for performing the method 800 includes a processing unit that can drive the external sensor in real time, a processing unit that can respond to sensor data in real time, and a processing unit that can respond to an identification result obtained by the accelerator.

Optionally, the method further includes: obtaining second sensor data from a second external sensor in real time, and extracting second target data from the second sensor data; and identifying the second target data based on a second neural network model to obtain a second identification result, where the second identification result and the first identification result are used to determine the target operation together.

The second external sensor may be, for example, one of the camera 193, the microphone 170C, the pressure sensor 180A, the gyro sensor 180B, the barometric sensor 180C, the magnetic sensor 180D, the acceleration sensor 180E, the distance sensor 180F, the proximity sensor 180G, the fingerprint sensor 180H, and the temperature sensor 180J, the touch sensor 180K, the ambient optical sensor 180L, and the bone conduction sensor 180M shown in FIG. 1.

That is, the two different external sensors respectively capture the first sensor data and the second sensor data, the first target data may be extracted from the first sensor data, the second target data may be extracted from the second sensor data, the first neural network model may identify the first target data, and the second neural network model may identify the second target data. There is an association relationship or correspondence between the first neural network model, a type of the first target data, and the first external sensor. There is an association relationship or correspondence between the second neural network model, a type of the second target data, and the second external sensor. The processor can determine the target operation based on the first identification result and the second identification result.

Optionally, parameters in the first neural network model are updated by using a network.

The parameters in the first neural network model may be, for example, a weight parameter, a neuron activation/inactivation parameter, and the like.

A person of ordinary skill in the art may be aware that, in combination with examples described in the embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by the person skilled in the art that, for purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected based on an actual requirement to achieve objectives of the solutions of the embodiments.

In addition, functional units in the embodiments of this application may be integrated into one processing unit, or each of the units may exist alone physically, or two or more units are integrated into one unit.

The foregoing descriptions are merely specific implementations of this application, but are not intended to limit the protection scope of this application. Any variation or replacement readily figured out by the person skilled in the art within the technical scope disclosed in this application shall fall within the protection scope of this application. Therefore, the protection scope of this application shall be subject to the protection scope of the claims.

## Claims

1. An integrated chip, comprising:
a first processor, configured to obtain first sensor data from a first external sensor, and extract first target data from the first sensor data, wherein the first processor is a real-time response processor; and
an accelerator, configured to identify the first target data based on a first neural network model to obtain a first identification result, wherein the first identification result is used to determine a target operation corresponding to the first identification result.

2. The integrated chip according to claim 1, wherein the integrated chip further comprises:
a second processor, configured to determine the target operation based on the first identification result.

3. The integrated chip according to claim 2, wherein
the first processor is further configured to: after extracting the first feature data, indicate the second processor to switch from a sleep state to a working state; and
the second processor is specifically configured to: when being in the working state, determine the target operation based on the first identification result.

4. The integrated chip according to claim 2 or 3, wherein
the first processor is further configured to determine a third identification result based on the first sensor data; and
the second processor is specifically configured to determine the target operation based on the first identification result and the third identification result.

5. The integrated chip according to any one of claims 1 to 3, wherein
the first processor is further configured to: obtain second sensor data from a second external sensor, and extract second target data from the second sensor data; and
the accelerator is further configured to identify the second target data based on a second neural network model to obtain a second identification result, wherein the second identification result and the first identification result are used to determine the target operation together.

6. The integrated chip according to claim 5, wherein
the accelerator is further configured to identify the first target data and the second target data in a time-sharing manner.

7. The integrated chip according to claim 6, wherein the integrated chip further comprises:
a controller, configured to determine a first priority corresponding to the first target data and a second priority corresponding to the second target data; and
the accelerator is specifically configured to identify, based on the first priority and the second priority, the first target data and the second target data in a time-sharing manner.

8. The integrated chip according to claim 6, wherein the integrated chip further comprises:
a controller, configured to: determine a first priority corresponding to the first target data and a second priority corresponding to the second target data, and control, based on the first priority and the second priority, the first processor to send the first target data and the second target data to the accelerator in a time-sharing manner, so that the accelerator identifies the first target data and the second target data in a time-sharing manner.

9. The integrated chip according to any one of claims 1 to 8, wherein the integrated chip further comprises:
a third processor, configured to switch from a sleep state to a working state in response to the target operation.

10. The integrated chip according to any one of claims 1 to 9, wherein parameters in the first neural network model are updated by using a network.

11. The integrated chip according to any one of claims 1 to 10, wherein the first external sensor comprises one of a camera, a microphone, a motion sensor, a distance sensor, an ambient optical sensor, a magnetic field sensor, a fingerprint sensor, or a temperature sensor.

12. An electronic device, comprising the integrated chip according to any one of claims 1 to 11.

13. A sensor data processing method, comprising:
obtaining first sensor data from a first external sensor in real time, and extracting first target data from the first sensor data; and
identifying the first target data based on a first neural network model to obtain a first identification result, wherein the first identification result is used to determine a target operation corresponding to the first identification result.

14. The method according to claim 13, wherein the method further comprises:
determining the target operation based on the first identification result.

15. The method according to claim 13 or 14, wherein the method further comprises:
obtaining second sensor data from a second external sensor in real time, and extracting second target data from the second sensor data; and
identifying the second target data based on a second neural network model to obtain a second identification result, wherein the second identification result and the first identification result are used to determine the target operation together.

16. The method according to any one of claims 13 to 15, wherein the method further comprises:
performing the target operation.

17. The method according to any one of claims 13 to 16, wherein parameters in the first neural network model are updated by using a network.

18. The method according to any one of claims 13 to 17, wherein the first external sensor comprises one of a camera, a microphone, a motion sensor, a distance sensor, an ambient optical sensor, a magnetic field sensor, a fingerprint sensor, or a temperature sensor.
